# EUROPÄISCHE PATENTSCHRIFT

(11) **EP 3 633 413 B1**
(45) Veröffentlichungstag und Bekanntmachung des Hinweises auf die Patenterteilung: **17.04.2024**
(21) Anmeldenummer: 18198077.2
(22) Anmeldetag: 02.10.2018
(51) Int. Cl.: G01V 8/20, F16P 3/14

(54) **SICHERHEITSANORDNUNG**
SAFETY ARRANGEMENT
DISPOSITIF DE SÉCURITÉ

(43) Veröffentlichungstag der Anmeldung: 08.04.2020
(73) Patentinhaber: Leuze electronic GmbH + Co. KG, 73277 Owen/Teck (DE)
(72) Erfinder: Feller, Bernhard, 86316 Friedberg (DE); Jüttner, Andreas, 81543 München (DE); Haberer, Hermann, 81379 München (DE)
(74) Vertreter: Ruckh, Rainer Gerhard

(56) Entgegenhaltungen:
- EP-A2- 2 017 524
- DE-A1-102008 004 941
- DE-A1-102008 050 943
- DE-T2- 60 208 487
- US-A1- 2015 301 221

## Beschreibung

Die Erfindung betrifft eine Sicherheitsanordnung gemäß dem Oberbegriff des Anspruchs 1.

Sicherheitsanordnungen, auf welche sich die vorliegende Erfindung bezieht, weisen einen Lichtvorhang zur Erfassung von Objekten in einem Überwachungsbereich auf. Der Lichtvorhang umfasst mehrere Paare von Lichtstrahlen emittierenden Sendern und Lichtstrahlen empfangenden Empfängern, die Strahlachsen des Lichtvorhangs bilden. Bei freiem Überwachungsbereich durchqueren die Lichtstrahlen der Sender den Überwachungsbereich und gelangen ungehindert zum zugeordneten Empfänger der jeweiligen Strahlachse. Ein Objekteingriff im Überwachungsbereich wird durch die Unterbrechung wenigstens einer Strahlachse erkannt.

Ein derartiger Lichtvorhang wird in bekannter Weise zur Absicherung von gefahrbringenden Anlagen eingesetzt. Ein typisches Anwendungsbeispiel ist die Anbringung eines Lichtvorhangs an einer Fördereinrichtung in Form eines Förderbands. Auf diesem werden nichtsicherheitskritische Objekte, wie zum Beispiel Pakete, der Anlage zugeführt.

Mit dem Lichtvorhang soll eine Sicherheitsfunktion derart realisiert werden, dass dieser bei einer Erkennung eines sicherheitskritischen Objekts, wie zum Beispiel einer Person, ein Sicherheitsausgangssignal in Form eines Abschaltbefehls für die Anlage generiert. Ein nichtsicherheitskritisches Objekt soll dagegen nicht zu einem Abschalten der Anlage führen. Daher ist bei einer solchen Sicherheitsanordnung eine Muting-Funktion realisiert. Hierzu sind ein oder mehrere Muting-Sensoren am Förderband montiert, und zwar in Förderrichtung des Förderbands vor dem Lichtvorhang. Wird mit dem oder den Muting-Sensoren ein nichtsicherheitskritisches Objekt detektiert und für eine vorgegebene Zeitdauer ein Muting aktiviert, das heißt der Lichtvorhang stummgeschaltet, so dass das nichtsicherheitskritische Objekt den Lichtvorhang passieren kann, ohne dass dieses einen Abschaltbefehl generiert.

Derartige Sicherheitsanordnungen sind jedoch fehlerbehaftet. Üblicherweise sind die Muting-Sensoren in einer vorbestimmten Höhe oberhalb des Förderbands angeordnet. Damit kann es vorkommen, dass kleine nichtsicherheitskritische Objekte von den Muting-Sensoren nicht erkannt werden. Dies hat zur Folge, dass der Lichtvorhang nicht gemutet wird, so dass dieses bei Eindringen des Lichtvorhangs unnötigerweise einen Abschaltbefehl für die Anlage generiert, was zu unnötigen Stillstandzeiten des Lichtvorhangs führt.

Sind dagegen die Muting-Sensoren in einer zu geringen Höhe oberhalb des Förderbands montiert, so können bereits kleine Bandunebenheiten des Förderbands zu einem Ansprechen der Muting-Sensoren führen. Dann wird unzulässig ein Muting aktiviert, so dass gegebenenfalls ein sicherheitskritisches Objekt, insbesondere eine Person, den Lichtvorhang passieren kann, ohne dass das erforderliche Sicherheitsausgangssignal generiert wird. Dies kann zu unkontrollierten Gefahrenzuständen führen.

Die EP 2 017 524 A2 betrifft ein Lichtgitter, welches zur Erfassung von Objekten in einem Überwachungsbereich dient und eine Anzahl von Strahlachsen, welche jeweils von einem Sendelichtstrahlen emittierenden Sender und einem zugeordneten Empfänger gebildet sind, umfasst. Bei freiem Überwachungsbereich sind die Strahlachsen nicht unterbrochen und bei einem Objekteingriff ist im Überwachungsbereich wenigstens eine Strahlachse unterbrochen. Weiterhin umfasst das Lichtgitter eine Auswerteeinheit, mittels derer bei Eindringen eines sicherheitskritischen Objekts in den Überwachungsbereich eine Objektmeldung generierbar ist. In der Auswerteeinheit ist ein nichtsicherheitskritisches Objekt bei Passieren des Überwachungsbereichs dadurch identifizierbar, dass während wenigstens einer Einlaufphase und einer Durchlaufphase als unterschiedliche Muting-Phasen die durch das nichtsicherheitskritische Objekt unterbrochenen Strahlachsen registriert werden und anhand dieser überprüft wird, ob für die Einlaufphase und Durchlaufphase spezifische, in der Auswerteeinheit gespeicherte Objektmerkmale des nichtsicherheitskritischen Objekts erfüllt sind. Bei einem identifizierten nichtsicherheitskritischen Objekt wird in der Auswerteeinheit ein Mutingsignal generiert.

Die DE 10 2008 050 943 A1 betrifft einen optischen Sensor zur Erfassung von Objekten innerhalb eines Schutzfelds. Der optische Sensor umfasst einen Lichtstrahlen emittierenden Sender und einen Lichtstrahlen empfangenden Empfänger. Mittels der Lichtstrahlen wird das Schutzfeld überwacht. Der optische Sensor umfasst eine Auswerteeinheit, in welcher die Empfangssignale des wenigstens einen Empfängers ausgewertet und eine Objektmeldung generiert wird, wenn ein Objekt in das Schutzfeld eindringt. Erfindungsgemäß sind Mittel zur Erfassung der Bewegungsrichtungen von Objekten vorgesehen. Die Parametrierung und/oder der Betriebszustand des optischen Sensors ist in Abhängigkeit der Bewegungsrichtungen von Objekten vorgebbar.

Die DE 10 2008 004 941 A1 betrifft eine Sicherheitsanordnung zur Überwachung eines Durchgangs, durch den nur zulässige Objekte in wenigstens eine Bewegungsrichtung befördert werden, mit einem ersten optoelektronischen Sensor, der wenigstens einen Lichtsender und wenigstens einen Lichtempfänger aufweist zur Überwachung eines ebenen, in dem Durchgang angeordneten Schutzfelds auf Durchtritt durch das Objekt, mit wenigstens einer Steuer- und Auswerteeinheit, durch die bei Durchtritt eines unzulässigen Objektes ein Warn- oder Steuersignal ableitbar ist, und mit einem Muting-Sensor, welcher in Bewegungsrichtung vor dem Durchgang angeordnet und mit der Steuer- und Auswerteeinheit zur rechtzeitigen Deaktivierung des Schutzfeldes bei zulässigen Objekten verbunden ist. In der Steuer- und Auswerteeinheit sind Mittel zur Bestimmung und Auswertung einer Objektgeschwindigkeit vorhanden. Abhängig von einer Objektdetektion durch den Muting-Sensor und abhängig von der Objektgeschwindigkeit ist das Warn- oder Steuersignal für einen berechneten Zeitpunkt und für eine berechnete Dauer unterdrückbar und zwar von dem Zeitpunkt des Einfahrens des Objektes in das Schutzfeld bis zum Verlassen des Schutzfeldes, so dass insgesamt das Schutzfeld nur für die Dauer des tatsächlichen Durchtritts des zulässigen Objektes deaktiviert ist.

Die US 2015/0301221 A1 betrifft ein Lichtgitter mit einer Anzahl von Paaren von Lichtstrahlen emittierenden Sendern und Lichtstrahlen empfangenden Empfängern, wobei mit den Lichtstrahlen ein Detektionsbereich überwacht wird. Mit Muting-Sensoren wird der Transport von Werkstücken zum Lichtgitter überwacht. Abhängig hiervon wird eine Muting-Funktion aktiviert, bei welcher wenigstens ein Teil des Detektionsbereichs stummgeschaltet ist, so dass ein Werkstück das Lichtgitter ungehindert passieren kann.

Die DE 602 08 487 T2 betrifft ein Sicherheitslichtgitter mit einer Muting-Funktion. Zur Bereitstellung der Muting-Funktion ist eine Verarbeitungseinheit vorgesehen, die Folgendes umfasst: Zeitmessmittel zum Messen eines Eingangszeitintervalls, das von der Unterbrechung eines ersten Strahls, verursacht durch den Transit des Gegenstands durch die Passage, bis zur Unterbrechung eines zweiten Strahls dauert, und zum Vergleichen des Eingangszeitintervalls mit einer ersten vorbestimmten Toleranzzeit, um ein Sicherheitsgitter-Muting-Signal immer dann auszugeben, wenn solch ein Eingangszeitintervall kürzer ist als die erste Toleranzzeit, Ausgangsunterbrechungsmittel zum Kontrollieren eines Ausgangszeitintervalls, das von der Wiederherstellung des ersten Strahls bis zur Auslösung der Passage andauert, und zum Ausgeben eines Kommandos zum Sperren des Mutings und Wiederherstellen des Sicherheitsgitters immer dann, wenn ein solches Ausgangszeitintervall länger ist als ein vorbestimmtes zweites Toleranzzeitintervall, und allgemeine Unterbrechungsmittel, um ein Zeitlimit abzuzählen, bei dessen Ablauf das Mutingsignal deaktiviert und das Sicherheitsgitter wiederhergestellt wird, die dadurch aktiviert werden, dass das Mutingsignal ausgegeben wird, wobei die Verarbeitungseinheit den Zähler der allgemeinen Unterbrechung für den Fall, dass das Sicherheitsgitter innerhalb des Zeitlimits ausgelöst wird, zurücksetzt.

Der Erfindung liegt die Aufgabe zugrunde, eine Sicherheitsanordnung der eingangs genannten Art bereitzustellen, bei der bei geringstem konstruktivem Aufwand eine hohe Funktionssicherheit gewährleistet ist.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft eine Sicherheitsanordnung mit einem Lichtvorhang zur Erfassung von Objekten in einem Überwachungsbereich mit einer Anordnung von Strahlachsen, welche jeweils von einem Lichtstrahlen emittierenden Sender und wenigstens einem zugeordneten Empfänger gebildet sind. Mit den Strahlachsen ist der Überwachungsbereich überwacht. Alternativ wird ein Flächen-Scanner eingesetzt, wobei die Lichtstrahlen eines Senders des Flächen-Scanners den Überwachungsbereich überstreichen. Der Überwachungsbereich ist in wenigstens einen Schutzbereich und wenigstens einen Muting-Steuerbereich unterteilt. Abhängig von Objektdetektion im Muting-Steuerbereich sind Muting-Funktionen steuerbar. Bei einer Objektdetektion im Schutzbereich ist nur dann ein Sicherheitsausgangssignal generiert, wenn kein Muting aktiviert ist.

Der Grundgedanke der Erfindung besteht somit darin, den von den Strahlachsen des Lichtvorhangs erfassten Überwachungsbereich in wenigstens zwei Teilbereiche mit unterschiedlichen Funktionalitäten zu unterteilen. Dies kann ebenso auch mit einem Flächen-Scanner erfolgen. Ohne Beschränkung der Allgemeinheit wird im Folgenden nur auf einen Lichtvorhang Bezug genommen.

Mit den Objektdetektionen im Schutzbereich wird die Sicherheitsfunktion des Lichtvorhangs erfüllt. Für den Fall, dass kein Muting aktiviert ist, das heißt der Lichtvorhang nicht stummgeschaltet ist, führt eine Objektdetektion im Schutzbereich zur Generierung eines Sicherheitsausgangssignals durch den Lichtvorhang. Das Sicherheitsausgangssignal ist insbesondere ein Abschaltbefehl für eine gefahrbringende Anlage, die mit dem Lichtvorhang gesichert wird.

Bei aktiviertem Muting ist dagegen die Sicherheitsfunktion des Lichtvorhangs stummgeschaltet. Dann führt weder eine Objektdetektion im Schutzbereich noch eine Objektdetektion im Muting-Steuerbereich zur Generierung des Sicherheitsausgangssignals.

Der Muting-Steuerbereich dient dazu, ein fehlerfreies, störungsunempfindliches Muting derart zu gewährleisten, dass nichtsicherheitskritische Objekte den Lichtvorhang passieren können, ohne dass der Lichtvorhang ein Sicherheitsausgangssignal generiert, so dass unnötige Stillstandzeiten der Anlage vermieden werden. Gleichzeitig wird mit dem Muting-Steuerbereich eine Sicherheitsfunktion derart erfüllt, dass abhängig von Objektdetektion im Muting-Steuerbereich spezifische Muting-Funktionen gesteuert werden, wodurch insbesondere erreicht wird, dass ein Muting tatsächlich nur dann aktiviert ist, wenn ein nichtsicherheitskritisches Objekt den Lichtvorhang passiert, jedoch ein Muting in jedem Fall dann deaktiviert ist, wenn kein nichtsicherheitskritisches Objekt sondem ein sicherheitskritisches Objekt den Lichtvorhang passiert. Dadurch werden unkontrollierte Gefahrenzustände sicher vermieden.

Dies wird insbesondere auch dadurch erreicht, dass abhängig von einer Objektdetektion im Muting-Steuerbereich ein Muting deaktivierbar ist.

Um eine weitere Überwachungsfunktion zu gewährleisten, ist bei dem Lichtvorhang vorteilhaft vorgesehen, dass sich der oder die Schutzbereiche und Muting-Steuerbereiche nicht überlappend und lückenlos zum Überwachungsbereich ergänzen.

Wesentlich ist, dass sich ein Schutzbereich und ein Muting-Steuerbereich nicht überlappen, so dass undefinierte Zustände derart, dass ein Objekt gleichzeitig in einem Schutzbereich und in einem Muting-Steuerbereich erfasst werden, nicht auftreten.

Vorteilhaft ist dabei, dass sich der Schutzbereich und der Muting-Steuerbereich zu dem Überwachungsbereich ergänzen, so dass der gesamte Überwachungsbereich des Lichtvorhangs zu Überwachungszwecken genutzt wird.

Die erfindungsgemäße Unterteilung des Überwachungsbereichs kann generell auf mehrere Schutzbereiche und/oder mehrere Muting-Steuerbereiche erweitert werden, je nach den spezifischen Applikationsanforderungen.

Gemäß einer vorteilhaften Ausgestaltung der Erfindung weist die Sicherheitsanordnung wenigstens einen Muting-Sensor auf, wobei abhängig von einer Objektdetektion mit dem Muting-Sensor ein Muting aktivierbar ist.

Insbesondere ist eine Anordnung von Muting-Sensoren zur Erfassung von Objektgeschwindigkeiten vorgesehen.

Werden von dem oder den Muting-Sensoren nichtsicherheitskritische Objekte detektiert, wird ein Muting aktiviert, so dass dann diese nichtsicherheitskritischen Objekte den Lichtvorhang ohne Auslösen eines Sicherheitsausgangssignals passieren können.

Vorteilhaft ist die Grenze zwischen Schutzbereich und Muting-Steuerbereich an die Positionierung des oder der Muting-Sensoren angepasst.

Gemäß einer besonders vorteilhaften Anordnung, ist dabei eine Fördereinrichtung vorgesehen, an welcher der Lichtvorhang angeordnet ist, so dass auf der Fördereinrichtung mit einer Fördergeschwindigkeit transportierte Objekte mit diesem erfassbar sind. In Förderrichtung der Fördereinrichtung ist der oder sind die Muting-Sensoren vor dem Lichtvorhang angeordnet.

Der Lichtvorhang steht dann in einem Neigungswinkel nach oben von der Fördereinrichtung hervor, so dass auf der Fördereinrichtung transportierte Objekte von diesem erfasst werden können. Die Muting-Sensoren befinden sich in einer definierten Anbringhöhe oberhalb der Fördereinrichtung, um darauf transportierte nichtsicherheitskritische Objekte erfassen zu können.

In diesem Fall ist die Grenze zwischen Schutzbereich und Muting-Steuerbereich an die Höhe, in der die Muting-Sensoren oberhalb der Fördereinrichtung angeordnet sind, angepasst. Der Muting-Steuerbereich liegt dann im unteren Teil des Überwachungsbereichs, der Schutzbereich schließt nach oben an den Muting-Steuerbereich an.

Durch die Anpassung der Grenze zwischen Muting-Steuerbereich und Schutzbereich an die Positionen der Muting-Sensoren können auf einfache Weise eventuelle Fehldetektionen der Muting-Sensoren kompensiert werden, so dass keine undefinierten oder sogar gefahrbringende Zustände auftreten.

Sind die Muting-Sensoren in geringer Höhe oberhalb der Fördereinrichtung angebracht, so können Unebenheiten der Fördereinrichtung zu einem Auslösen der Muting-Sensoren führen.

Da der Muting-Steuerbereich an die Anbringhöhe der Muting-Sensoren angepasst ist, das heißt der Muting-Steuerbereich unterhalb des Schutzbereichs angeordnet ist, werden nachfolgend derartige Unebenheiten der Fördereinrichtung im Muting-Steuerbereich detektiert und führen nicht zu einem unerwünschten Auslösen des Sicherheitsausgangssignals.

Umgekehrt kann durch eine Detektion einer solchen Unebenheit der Fördereinrichtung im Muting-Steuerbereich das unkontrolliert eingeleitete Muting beendet werden, so dass dann der Lichtvorhang seine Sicherheitsfunktion wieder ausführt.

Auch Fehldetektionen der Muting-Sensoren derart, dass diese ein zu kleines nichtsicherheitskritisches Objekt nicht erfassen und so kein Muting aktivieren, werden mit dem Muting-Steuerbereich kompensiert, da das nichtsicherheitskritische Objekt nur im Muting-Steuerbereich, nicht aber im Schutzbereich detektiert wird und so kein Sicherheitsausgangssignal generiert.

Gemäß einer vorteilhaften Ausgestaltung wird abhängig von einer Detektion eines auf der Fördereinrichtung geführten Objektes mittels des oder der Muting-Sensoren ein Muting-Zeitfenster geöffnet. Während des Muting-Zeitfensters ist ein Muting aktiviert.

Die Muting-Sensoren sind typisch nicht direkt am Lichtvorhang montiert sondem in Abstand zu diesem. Entsprechend der Fördergeschwindigkeit der Fördereinrichtung dauert es somit eine gewisse Zeit, bis ein nichtsicherheitskritisches Objekt, nachdem es von den Muting-Sensoren detektiert wurde, in den Bereich des Lichtvorhangs gelangt. Dieser Verzögerungszeit wird durch eine geeignete Wahl eines Muting-Zeitfensters Rechnung getragen, so dass gewährleistet ist, dass das Muting nur dann aktiviert ist, wenn sich das nichtsicherheitskritische Objekt im Bereich des Lichtvorhangs befindet.

Da mehrere nichtsicherheitskritische Objekte auf der Fördereinrichtung transportiert werden, wird bei jeder Detektion eines nichtsicherheitskritischen Objekts ein entsprechendes Muting-Zeitfenster definiert.

Dabei können mehrere durch eine Detektion von Objekten auf der Fördereinrichtung mittels des oder der Muting-Sensoren geöffnete Muting-Zeitfenster zeitlich überlappen.

Gemäß einer vorteilhaften Ausgestaltung wird ein Muting-Zeitfenster nach Ablauf eines durch die Fördergeschwindigkeit oder Fördereinrichtung bestimmten Zeitintervalls nach erfolgter Detektion eines Objektes mittels des oder der Muting-Sensoren geöffnet.

Dabei wird ausgenutzt, dass sich bei fehlerfreiem Betrieb die Fördereinrichtung mit einer definierten Geschwindigkeit bewegt, so dass mit dieser berechnet werden kann, wann nach einer Detektion mit den Muting-Sensoren das nichtsicherheitskritische Objekte in den Bereich des Lichtvorhangs gelangt.

Weiter kann die Berechnung des Muting-Zeitfensters dahingehend ausgeführt sein, dass das Ende eines Muting-Zeitfensters abhängig vom Anfang dieses Muting-Zeitfensters berechnet wird.

Gemäß einer ersten Variante ist beziehungsweise sind der Anfang und/oder das Ende eines Muting-Zeitfensters durch mittels einer Schaltungsanordnung bewirkten Verzögerungen des Signals der oder eines Muting-Sensors bei Detektion eines Objekts vorgesehen.

Geeignete Schaltungsanordnungen hierfür sind Fifo ("first in first out") Register oder Schieberegister.

Alternativ wird das Ende des Muting-Zeitfensters abhängig von der Fördergeschwindigkeit oder vom Förderweg der Fördereinrichtung berechnet.

Im negativen, fehlerfreien Betrieb bleibt ein Muting für die volle Zeit eines jeweiligen Muting-Zeitfensters aktiviert.

Jedoch können externe Einflüsse ein vorzeitiges Beenden des Muting-Zeitfensters erfordern, um ein dann gefahrbringendes zu langes Stummschalen des Lichtvorhangs zu vermeiden.

Beispielsweise wird ein Muting vor Ende des Muting-Zeitfensters geschlossen, wenn eine Objektdetektion im Schutzbereich erfolgt, oder wenn eine Objektdetektion im Muting-Steuerbereich erfolgt, oder wenn die Fördergeschwindigkeit oberhalb eines Grenzwerts oder unterhalb eines Grenzwerts liegt.

Bei einem vorzeitigen Muting-Ende durch eine Objektdetektion im Muting-Steuerbereich oder Schutzbereich des Lichtvorhangs kann irregulären Objekteingriffen während der Muting-Phase Rechnung getragen werden.

Für den Fall, dass eine Störung der Fördereinrichtung derart vorliegt, dass die Fördergeschwindigkeit einen zulässigen Grenzwert überschreitet oder einen zulässigen Grenzwert unterschreitet, wobei im Extremfall ein Stillstehen der Fördereinrichtung vorliegt, wird ebenfalls das Muting beendet um in einem solchen Störfall durch die Aktivierung der Sicherheitsfunktion des Lichtvorhangs Gefahrensituationen zu vermeiden.

Die Erfindung wird im Folgenden anhand der Zeichnungen erläutert. Es zeigen:
- Figur 1 a:: Erstes Ausführungsbeispiel der erfindungsgemäßen Sicherheitsanordnung in einer perspektivischen Darstellung.
- Figur 1b:: Seitenansicht der Sicherheitsanordnung gemäß Figur 1a.
- Figur 2a:: Zweites Ausführungsbeispiel der erfindungsgemäßen Sicherheitsanordnung in einer perspektivischen Darstellung.
- Figur 2b:: Schematische Darstellung eines Flächen-Scanners für die Sicherheitsanordnung gemäß Figur 2a.
- Figur 3:: Zeitdiagramme für die Realisierung einer ersten Muting-Funktion bei der Sicherheitsanordnung gemäß der Figuren 1 und 2.
- Figur 4:: Zeitdiagramme für die Realisierung einer zweiten Muting-Funktion bei der Sicherheitsanordnung gemäß der Figuren 1 und 2.
- Figur 5:: Blockschaltbild einer Steuerungsfunktion für die Sicherheitsanordnung gemäß den Figuren 1 und 2.

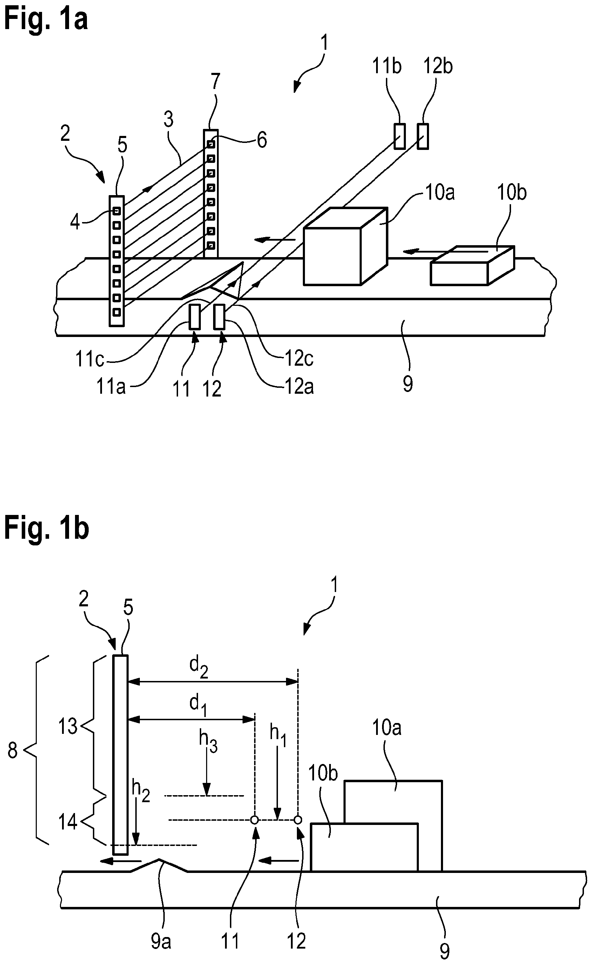

Die Figuren 1a und 1b zeigen ein Ausführungsbeispiel der erfindungsgemäßen Sicherheitsanordnung 1.

Die Sicherheitsanordnung 1 umfasst einen Lichtvorhang 2 als Sicherheitskomponente zur Gefahrenbereichsüberwachung einer gefahrbringenden Anlage. Der Lichtvorhang 2 weist eine Anzahl von Lichtstrahlen 3 emittierenden Sendern 4 in einem ersten Gehäuse 5 und eine Anzahl von Empfängern 6 in einem zweiten Gehäuse 7 auf. Die Gehäuse 5, 7 sind in Abstand gegenüberliegend angeordnet.

Mit dem Lichtvorhang 2 wird ein Überwachungsbereich 8 zwischen den beiden Gehäusen 5, 7 überwacht. Alternativ kann der Lichtvorhang 2 auch als Reflex-Lichtvorhang ausgebildet sein. Dann sind alle Sender 4 und Empfänger 6 in einem Gehäuse an einem Rand des Überwachungsbereichs 8 angeordnet. Am gegenüberliegenden Rand des Überwachungsbereichs 8 befindet sich ein Reflektor.

Jeder Sender 4 bildet mit einem zugeordneten Empfänger 6 eine Strahlachse. Die Strahlachsen bilden den vom Lichtvorhang 2 überwachenden Überwachungsbereich 8. Bei freiem Überwachungsbereich 8 treffen die Lichtstrahlen 3 eines Senders 4 ungehindert auf den zugeordneten Empfänger 6 der jeweiligen Strahlachse. Bei einem Objekteingriff im Überwachungsbereich 8 wird wenigstens eine Strahlachse unterbrochen. Derartige Objekteingriffe werden in einer Auswerteeinheit durch eine Schwellwertbewertung der Empfangssignale der Empfänger 6 erfasst.

Der Lichtvorhang 2 ist als Sicherheitssensor ausgebildet und weist demzufolge einen fehlersicheren Aufbau auf, was insbesondere durch eine redundante Auswerteeinheit in Form zweier sich gegenseitig zyklisch überwachende Rechnereinheiten realisiert wird.

Der Lichtvorhang 2 ist an einer Fördereinrichtung montiert, die in Form eines Förderbands 9 ausgebildet ist. Die Längsachsen der Gehäuse 5, 7 des Lichtvorhangs 2 sind senkrecht zur Oberseite des Förderbands 9 orientiert. Prinzipiell sind auch andere Neigungswinkel der Gehäuse 5, 7 des Lichtvorhangs 2 möglich.

Auf dem Förderband 9 werden mit einer vorgegebenen, vorzugsweise konstanten Fördergeschwindigkeit Pakete 10a, 10b als nichtsicherheitskritische Objekte in einer mit Pfeilen in Figur 1a gekennzeichneten Förderrichtung transportiert.

In Förderrichtung vor dem Lichtvorhang 2 sind zwei als Lichtschranken ausgebildete Muting-Sensoren 11, 12 montiert. Jeder Muting-Sensor 11, 12 weist einen Muting-Sender 11a, 12a und einen Muting-Empfänger 11b, 12b auf. Ist kein Paket im Bereich eines Muting-Sensors 11, 12 angeordnet, treffen vom Muting-Sender 11a, 12a emittierte Muting-Lichtstrahlen 11c, 12c ungehindert auf den Muting-Empfänger 11b, 12b. Durch Pakete 10a, 10b werden diese Muting-Lichtstrahlen 11c, 12c unterbrochen.

Die Muting-Sensoren 11, 12 sind in einer Anbringhöhe h1 oberhalb des Förderbands 9 montiert, und zwar in Förderrichtung des Förderbands 9 dicht hintereinanderliegend angeordnet. Durch die Sequenz der Unterbrechungen der Muting-Lichtstrahlen 11c, 12c durch die Pakete 10a, 10b werden diese erkannt. Zudem wird deren Geschwindigkeit erfasst.

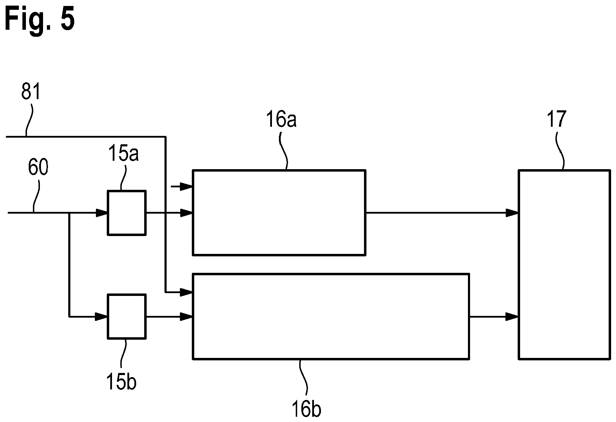

Die gemeinsame Auswertung von Signalen des Förderbands 9, des Muting-Sensors 11, 12 und auch des Lichtvorhangs 2 erfolgt in einer Steuereinheit, wobei Funktionen dieser Steuereinheit in Figur 5 dargestellt sind.

Wie aus Figur 1b ersichtlich, ist der Überwachungsbereich 8 des Lichtvorhangs 2 erfindungsgemäß in einen Schutzbereich 13 und in einen Muting-Steuerbereich 14 unterteilt. Strahlenachsen im unteren Bereich des Lichtvorhangs 2 bilden den Muting-Steuerbereich 14. Die darüberliegenden Strahlenachsen bilden den Schutzbereich 13.

Generell können auch mehrere Schutzbereiche 13 beziehungsweise Muting-Steuerbereiche 14 vorgesehen sein, die sich nicht überlappend und lückenlos zum Überwachungsbereich 8 ergänzen.

Wie in Figur 1b dargestellt, liegt der untere Rand des Überwachungsbereichs 8, das heißt die unterste Strahlenachse des Lichtvorhangs 2 auf einer Höhe h2 oberhalb des Förderbands 9. Die Grenze zwischen Schutzbereich 13 und Muting-Steuerbereich 14 liegt auf einer Höhe h3 oberhalb des Förderbands 9, das heißt die Differenz h3 minus h2 ist die Größe des Muting-Steuerbereichs 14.

Im vorliegenden Fall liegt die Grenze zwischen Schutzbereich 13 und Muting-Steuerbereich 14 geringfügig höher als die Muting-Sensoren 11, 12.

Wie Figur 1b weiter zeigt, liegt der erste Muting-Sensor 11 in einem Abstand d1 zum Lichtvorhang 2 und der zweite Muting-Sensor 12 in einem Abstand d2 zum Lichtvorhang 2.

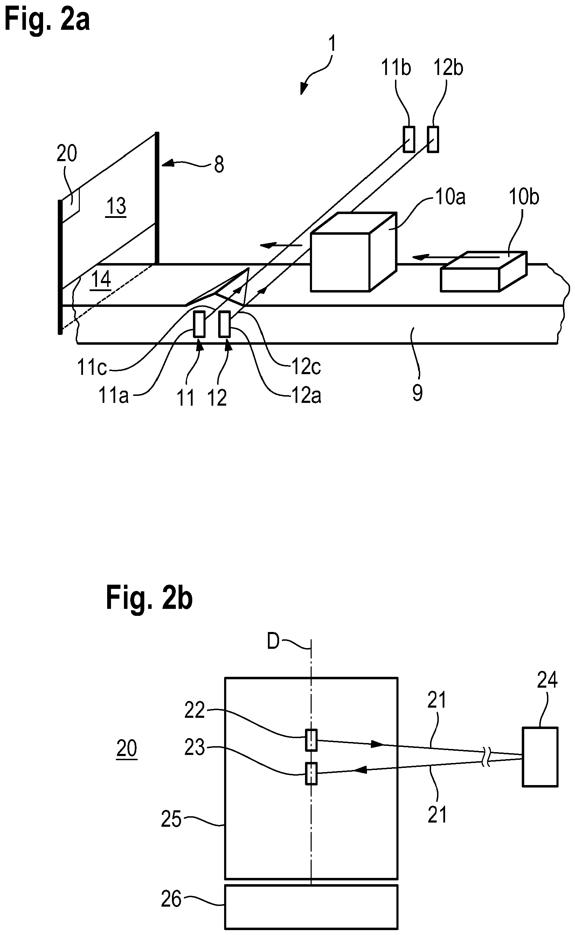

Figur 2a zeigt eine Variante der Ausführungsform der Figuren 1a, 1b. Die Ausführungsform gemäß Figur 2a unterscheidet sich von der Ausführungsform der Figuren 1a, 1b nur dadurch, dass anstelle eines Lichtvorhangs 2 ein Flächen-Scanner 20 zur Überwachung des Überwachungsbereichs 8 eingesetzt wird, wobei der Überwachungsbereich 8 wieder in einen Schutzbereich 13 und einen Muting-Steuerbereich 14 unterteilt ist.

Der Flächen-Scanner 20 ist, wie Figur 2b zeigt, insbesondere als Flächendistanzsensor ausgebildet. Der Flächendistanzsensor weist einen Distanzsensor mit einem Lichtstrahlen 21 emittierenden Sender 22 und einem Lichtstrahlen 21 emittierenden Empfänger 23 auf. Die Distanzmessungen erfolgen beispielsweise nach einem Puls-Laufzeit-Verfahren. Hierzu wird die Lichtlaufzeit der Lichtstrahlen 21 zu einem zu detektierenden Gegenstand 24 ermittelt. Der Distanzsensor ist in einem rotierenden Meßkopf 25 gelagert, der auf einem feststehenden Sockel 26 um eine Drehachse D drehbar ist. Durch diese Drehbewegung werden die Lichtstrahlen 21 periodisch im Überwachungsbereich 8 geführt.

Alternativ können die Komponenten des Distanzsensors stationär in einem Gehäuse angeordnet sein. Dann werden die Lichtstrahlen 21 über eine rotierende Ablenkeinheit im Überwachungsbereich 8 geführt.

Im Folgenden wird die Funktion der erfindungsgemäßen Sicherheitsanordnung 1 anhand der Ausführungsform der Figuren 1a, 1b erläutert, bei welcher als Sicherheitssensor ein Lichtvorhang 2 vorgesehen ist. Die Funktion der Sicherheitsanordnung 1 mit dem Flächen-Scanner 20 ist hierzu völlig analog.

Wird mit den Muting-Sensoren 11, 12 ein Paket 10a, 10b als nichtsicherheitskritisches Objekt detektiert, wird ein Muting aktiviert, mit dem die Sicherheitsfunktion des Lichtvorhangs 2 stummgeschaltet wird.

Ist kein Muting aktiviert, übt der Lichtvorhang 2 seine Sicherheitsfunktion dadurch aus, dass dann, wenn ein Objekteingriff im Schutzbereich 13 registriert wird, der Lichtvorhang 2 ein Sicherheitsausgangssignal in Form eines Abschaltbefehls der gefahrbringenden Anlage erzeugt. Dagegen führt eine Objektdetektion im Muting-Steuerbereich 14 nicht zur Generierung eines Sicherheitsausgangssignals.

Dadurch, dass dem Schutzbereich 13 der Muting-Steuerbereich 14 vorgeordnet ist, können Fehlfunktionen des Lichtvorhangs 2 vermieden werden.

Dies ist insbesondere in Figur 1b veranschaulicht. Figur 1b zeigt eine nach oben vom Förderband 9 hervorstehende Unebenheit 9a. Die Unebenheit 9a ist so hoch, dass sie bei Passieren des Lichtvorhangs 2 in den Überwachungsbereich 8 ragt. Würde sich der Schutzbereich 13 über den gesamten Überwachungsbereich 8 erstrecken, würde eine Detektion der Unebenheit 9a zu einer unnötigen Generierung eines Sicherheitsausgangssignals führen.

Da jedoch der vordere Teil des Überwachungsbereichs 8 als Muting-Steuerbereich 14 ausgebildet ist, wird die Unebenheit 9a nur im Muting-Steuerbereich 14 detektiert, so dass ein unnötiges Sicherheitsausgangssignal unterbleibt.

Weiter zeigt Figur 1b, dass auf dem Förderband 9 Pakete 10a, 10b mit unterschiedlichen Größen transportiert werden. Während das Paket 10a so groß ist, dass es von den Muting-Sensoren 11, 12 erfasst wird, wird das Paket 10b nicht von den Muting-Sensoren 11, 12 erfasst.

Bei Passieren des Pakets 10b sprechen somit die Muting-Sensoren 11, 12 nicht an und es wird kein Muting aktiviert. Das Paket 10b passiert somit den Lichtvorhang 2, ohne dass dessen Sicherheitsfunktion stummgeschaltet wird. Dennoch unterbleibt ein unerwünschtes Auslösen des Sicherheitsausgangssignals, da der Muting-Steuerbereich 14 so dimensioniert ist, dass das Paket 10b bei Passieren des Lichtvorhangs 2 ausschließlich im Muting-Steuerbereich 14 liegt und nicht in den Schutzbereich 13 ragt.

Bei Passieren des Pakets 10a sprechen jedoch die Muting-Sensoren 11, 12 an und es wird ein Muting aktiviert. Damit das Muting genau dann aktiviert ist, wenn das Paket 10a den Lichtvorhang 2 passiert, wird erfindungsgemäß ein Muting-Zeitfenster 82 vorgegeben, innerhalb dessen das Muting aktiviert ist. Dabei sind bei der Dimensionierung des Muting-Zeitfensters 82 die Abstände der Muting-Sensoren 11, 12 zum Lichtvorhang 2 berücksichtigt, so dass das Muting-Zeitfenster 82 dann geöffnet wird, wenn das Paket 10a gerade in den Überwachungsbereich 8 des Lichtvorhangs 2 eintritt und dann geschlossen wird, wenn das Paket 10a den Überwachungsbereich 8 verlassen hat.

Der Anfang und das Ende des Muting-Zeitfensters 82 können in der Steuereinheit ausgehend von den Zeitpunkten der Muting-Sensoren 11, 12 berechnet werden. Insbesondere wird das Ende des Muting-Zeitfensters 82 abhängig von der Fördergeschwindigkeit oder vom Förderweg der Fördereinrichtung berechnet.

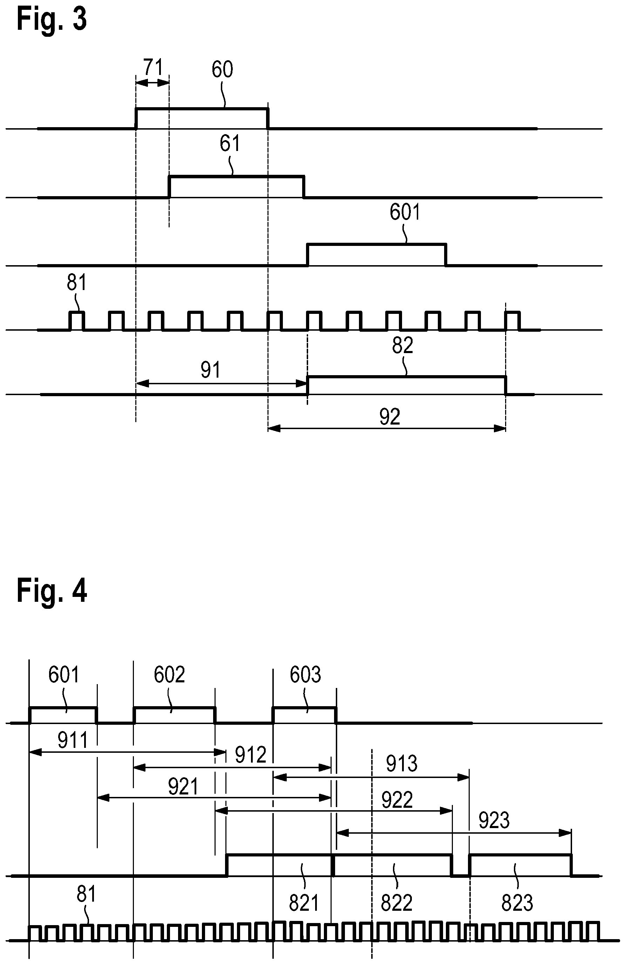

Dies ist anhand der Zeitdiagramme der Figur 3 veranschaulicht.

Bei der Generierung des Muting-Zeitfensters 82 werden die Ansprechzeit des Muting-Signals 61 des Muting-Sensors 11 und optional die Ansprechzeit des Muting-Signals 60 des Muting-Sensors 12 bei der Detektion des Pakets 10a herangezogen. Durch den räumlichen Versatz der Muting-Sensoren 11, 12 sprechen diese bei der Detektion des Pakets 10a um das Zeitintervall 71 versetzt an, dessen Länge sich aus der Fördergeschwindigkeit des Förderbands 9 ergibt.

Das Förderband 9 selbst generiert ein pulsförmiges Bandsignal 81, das beispielsweise durch einen Weggeber generiert wird. Jeweils nach Zurücklegen eines konstanten Wegintervalls wird ein Puls des Bandsignals 81 generiert.

Im vorliegenden Fall wird das Muting-Zeitfenster 82 allein aus dem Muting-Signal 60 des Muting-Sensors 11 durch eine Bandwegverzögerung 91 der Beginn des Muting-Zeitfensters 82 berechnet, wobei die Bandwegverzögerung 91 bei bekannter Fördergeschwindigkeit dem Weg des Pakets 10a zum Lichtvorhang 2 entspricht. Ebenso wird ausgehend von der fallenden Flanke des Muting-Signals 60 durch eine Bandwegverzögerung 92 das Ende des Muting-Zeitfensters 82 berechnet.

Durch diese Berechnung des Muting-Zeitfensters 82 ist gewährleistet, dass dann, wenn das Paket 10a den Lichtvorhang 2 passiert und im Schutzbereich 13 und Muting-Steuerbereich 14 detektiert wird (in Figur 3 mit dem Detektionszeitinervall 601 berechnet), das Muting-Zeitfenster 82 geöffnet ist.

Figur 5 zeigt eine zu Figur 3 gehörige Schaltungsanordnung als Bestandteil der Steuereinheit. Die steigende Flanke des Muting-Signals 60 wird einem ersten Flankendetektor 15a zugeführt, die fallende Flanke des Muting-Signals 60 wird einem zweiten Flankendetektor 15b zugeführt. Die Ausgangssignale der Flankendetektoren 15a, 15b werden jeweils einem Schieberegister 16a, 16b zugeführt. Anstelle der Schieberegister 16a, 16b können auch FIFO-Register vorgesehen sein. Mit den Schieberegistern 16a, 16b werden die Signalflanken des Muting-Signals 60 jeweils um die Bandwegverzögerung 91 beziehungsweise 92 verzögert. Die so verzögerten Signale werden in einer Signalauswertung 17 zum Muting-Zeitfenster 82 verknüpft.

Generell wird bei jeder Detektion eines nichtsicherheitskritischen Objekts ein diesem zugeordnetes Muting-Zeitfenster 82 berechnet. Dies zeigt exemplarisch Figur 4.

Anstelle eines Muting-Signals 60 sind bei dem Beispiel gemäß Figur 4 drei Muting-Signale 601, 602, 603 vorhanden, die durch die serielle Detektion dreier verschiedener Pakete durch den Muting-Sensor 11 generiert werden.

Analog zum Beispiel gemäß Figur 3 werden für das erste Muting-Signal 601 ausgehend von der steigenden beziehungsweise fallenden Flanke Bandwegverzögerungen 911, 921 hinzuaddiert, wodurch sich der Anfang und das Ende des Muting-Zeitfensters 821 ergibt.

Entsprechend wird ausgehend vom Muting-Signal 602 mit Bandwegverzögerungen 912, 922 das Muting-Zeitfenster 822 berechnet.

Schließlich wird ausgehend vom Muting-Signal 603 mit Bandwegverzögerungen 913, 923 das Muting-Zeitfenster 823 berechnet.

Wie Figur 4 zeigt, verschmelzen die Muting-Zeitfenster 821 und 822 zu einem gemeinsamen Muting-Zeitfenster.

Um eventuelle Gefahrenzustände zu vermeiden, können Muting-Zeitfenster 82, 821, 822, 823 ereignisgesteuert vorzeitig geschlossen werden. Insbesondere wird ein Muting vor Ende des Muting-Zeitfensters 82, 821, 822, 823 geschlossen, wenn eine Objektdetektion im Schutzbereich 13 erfolgt, oder wenn eine Objektdetektion im Muting-Steuerbereich 14 erfolgt, oder wenn die Fördergeschwindigkeit oberhalb eines Grenzwerts oder unterhalb eines Grenzwerts liegt.

### Bezugszeichenliste

- (1): Sicherheitsanordnung
- (2): Lichtvorhang
- (3): Lichtstrahlen
- (4): Sender
- (5): Gehäuse
- (6): Empfänger
- (7): Gehäuse
- (8): Überwachungsbereich
- (9): Förderband
- (9a): Unebenheit
- (10a, b): Pakete
- (11): Muting-Sensor
- (11a): Muting-Sender
- (11b): Muting-Empfänger
- (11c): Muting-Lichtstrahlen
- (12): Muting-Sensor
- (12a): Muting-Sender
- (12b): Muting-Empfänger
- (12c): Muting-Lichtstrahlen
- (13): Schutzbereich
- (14): Muting-Steuerbereich
- (15a, b): Flankendetektor
- (16a, b): Schieberegister
- (17): Signalauswertung
- (20): Flächen-Scanner
- (21): Lichtstrahlen
- (22): Sender
- (23): Empfänger
- (24): Gegenstand
- (25): Meßkopf
- (26): Sockel
- (60): Muting-Signal
- (61): Muting-Signal
- (71): Zeitintervall
- (81): Bandsignal
- (82): Muting-Zeitfenster
- (91): Bandwegverzögerung
- (92): Bandwegverzögerung
- (601): Muting-Signal
- (602): Muting-Signal
- (603): Muting-Signal
- (821): Muting-Zeitfenster
- (822): Muting-Zeitfenster
- (823): Muting-Zeitfenster
- (911): Bandwegverzögerung
- (912): Bandwegverzögerung
- (913): Bandwegverzögerung
- (922): Bandwegverzögerung
- (923): Bandwegverzögerung

- d1: Abstand
- d2: Abstand
- h1: Anbringhöhe
- h2: Höhe
- h3: Höhe

## Patentansprüche

1. Sicherheitsanordnung (1) mit einem Lichtvorhang (2) zur Erfassung von Objekten in einem Überwachungsbereich (8) mit einer Anordnung von Strahlachsen, welche jeweils von einem Lichtstrahlen (3) emittierenden Sender (4) und wenigstens einem zugeordneten Empfänger (6) gebildet sind, wobei mit den Strahlachsen der Überwachungsbereich (8) überwacht ist, oder mit einem Flächen-Scanner (20), bei welchem von einem Sender (22) emittierte Lichtstrahlen (21) den Überwachungsbereich (8) überstreichen, **dadurch gekennzeichnet, dass** der Überwachungsbereich (8) in wenigstens einen Schutzbereich (13) und wenigstens einen Muting-Steuerbereich (14) unterteilt ist, wobei die Sicherheitsanordnung dazu eingerichtet ist,
- dass abhängig von Objektdetektion im Muting-Steuerbereich (14) Muting-Funktionen der Sicherheitsanordnung gesteuert werden,
- dass bei einer Objektdetektion im Schutzbereich (13) nur dann ein Sicherheitsausgangssignal generiert wird, wenn kein Muting aktiviert ist, und
- dass bei einer Objektdetektion im Muting-Steuerbereich (14) weder bei aktiviertem Muting noch bei nicht aktiviertem Muting ein Sicherheitsausgangssignal generiert wird.

2. Sicherheitsanordnung (1) nach Anspruch 1, **dadurch gekennzeichnet, dass** sich der oder die Schutzbereiche (13) und Muting-Steuerbereiche (14) nicht überlappend und lückenlos zum Überwachungsbereich (8) ergänzen.

3. Sicherheitsanordnung (1) nach einem der Ansprüche 1 oder 2, **dadurch gekennzeichnet, dass** abhängig von einer Objektdetektion im Muting-Steuerbereich (14) ein Muting deaktivierbar ist.

4. Sicherheitsanordnung (1) nach einem der Ansprüche 1 - 3, **dadurch gekennzeichnet, dass** diese wenigstens einen Muting-Sensor (11, 12) aufweist, wobei abhängig von einer Objektdetektion mit dem Muting-Sensor (11, 12) ein Muting aktivierbar ist.

5. Sicherheitsanordnung (1) nach Anspruch 4, **dadurch gekennzeichnet, dass** eine Anordnung von Muting-Sensoren (11, 12) zur Erfassung von Objektgeschwindigkeiten vorgesehen ist.

6. Sicherheitsanordnung (1) nach einem der Ansprüche 4 oder 5, **dadurch gekennzeichnet, dass** die Grenze zwischen Schutzbereich (13) und Muting-Steuerbereich (14) an die Positionierung des oder der Muting-Sensoren (11, 12) angepasst ist.

7. Sicherheitsanordnung (1) nach einem der Ansprüche 4 oder 5, **dadurch gekennzeichnet, dass** eine Fördereinrichtung vorgesehen ist, an welcher der Lichtvorhang (2) angeordnet ist, so dass auf der Fördereinrichtung mit einer Fördergeschwindigkeit transportierte Objekte mit diesem erfassbar sind, wobei in Förderrichtung der Fördereinrichtung der oder die Muting-Sensoren (11, 12) vor dem Lichtvorhang (2) angeordnet sind.

8. Sicherheitsanordnung (1) nach Anspruch 7, **dadurch gekennzeichnet, dass** abhängig von einer Detektion eines auf der Fördereinrichtung geführten Objektes mittels des oder der Muting-Sensoren (11, 12) ein Muting-Zeitfenster (82, 821, 822, 823) geöffnet wird, wobei während des Muting-Zeitfensters (82, 821, 822, 823) ein Muting aktiviert ist.

9. Sicherheitsanordnung (1) nach Anspruch 8, **dadurch gekennzeichnet, dass** mehrere durch eine Detektion von Objekten auf der Fördereinrichtung mittels des oder der Muting-Sensoren (11, 12) geöffnete Muting-Zeitfenster (82, 821, 822, 823) zeitlich überlappen.

10. Sicherheitsanordnung (1) nach Anspruch 8 oder 9, **dadurch gekennzeichnet, dass** ein Muting-Zeitfenster (82, 821, 822, 823) nach Ablauf eines durch die Fördergeschwindigkeit oder Fördereinrichtung bestimmten Zeitintervalls (71) nach erfolgter Detektion eines Objektes mittels des oder der Muting-Sensoren (11, 12) geöffnet wird.

11. Sicherheitsanordnung (1) nach einem der Ansprüche 8 - 10, **dadurch gekennzeichnet, dass** das Ende eines Muting-Zeitfensters (82, 821, 822, 823) abhängig vom Anfang dieses Muting-Zeitfensters (82, 821, 822, 823) berechnet wird.

12. Sicherheitsanordnung (1) nach Anspruch 11, **dadurch gekennzeichnet, dass** der Anfang und/oder das Ende eines Muting-Zeitfensters (82, 821, 822, 823) durch mittels einer Schaltungsanordnung bewirkte Verzögerungen des Signals der oder eines Muting-Sensors (11, 12) bei Detektion eines Objekts vorgesehen ist beziehungsweise sind.

13. Sicherheitsanordnung (1) nach Anspruch 11, **dadurch gekennzeichnet, dass** das Ende des Muting-Zeitfensters (82, 821, 822, 823) abhängig von der Fördergeschwindigkeit oder vom Förderweg der Fördereinrichtung berechnet wird.

14. Sicherheitsanordnung (1) nach einem der Ansprüche 8 bis 13, **dadurch gekennzeichnet, dass** ein Muting vor Ende des Muting-Zeitfensters (82, 821, 822, 823) geschlossen wird, wenn eine Objektdetektion im Schutzbereich (13) erfolgt, oder wenn eine Objektdetektion im Muting-Steuerbereich (14) erfolgt, oder wenn die Fördergeschwindigkeit oberhalb eines Grenzwerts oder unterhalb eines Grenzwerts liegt.

15. Sicherheitsanordnung (1) nach Anspruch 14, **dadurch gekennzeichnet, dass** das Sicherheitsausgangssignal ein Abschaltbefehl für eine gefahrbringende Anlage ist.

## Claims

1. A safety arrangement (1) with a light curtain (2) for detecting objects in a monitoring area (8) with an arrangement of beam axes which are each formed by a transmitter (4) emitting light beams (3) and at least one associated receiver (6) wherein the monitoring area (8) is monitored with the beam axes, or with an area scanner (20), in which light beams (21) emitted by a transmitter (22) sweep over the monitoring area (8), **characterised in that** the monitoring area (8) is subdivided into at least one protective area (13) and at least one muting control area (14), wherein the safety arrangement is set up so that muting functions of the safety arrangement are controlled as a function of object detection in the muting control area (14), a safety output signal is only generated in the event of object detection in the protection area (13) if no muting is activated, and in the event of object detection in the muting control area (14), a safety output signal is generated neither when muting is activated nor when muting is not activated.

2. A safety arrangement (1) according to claim 1, **characterised in that** the protective area or areas (13) and muting control areas (14) do not overlap and complement each other without gaps to form the monitoring area (8).

3. A safety arrangement (1) according to one of claims 1 or 2, **characterised in that** muting can be deactivated depending on an object detection in the muting control area (14).

4. A safety arrangement (1) according to one of claims 1 to 3, **characterised in that** it has at least one muting sensor (11, 12), wherein muting can be activated depending on an object detection with the muting sensor (11, 12).

5. A safety arrangement (1) according to claim 4, **characterised in that** an arrangement of muting sensors (11, 12) is provided for detecting object velocities.

6. A safety arrangement (1) according to one of claims 4 or 5, **characterised in that** the boundary between the protective area (13) and the muting control area (14) is adapted to the positioning of the muting sensor(s) (11, 12).

7. A safety arrangement (1) according to one of claims 4 or 5, **characterised in that** a conveyor device is provided on which the light curtain (2) is arranged, so that objects transported on the conveyor device at a conveying speed can be detected by the light curtain, wherein the muting sensor or sensors (11, 12) are arranged in front of the light curtain (2) in the conveying direction of the conveyor device.

8. A safety arrangement (1) according to claim 7, **characterised in that** a muting time window (82, 821, 822, 823) is opened by means of the muting sensor or sensors (11, 12) as a function of a detection of an object guided on the conveyor device, wherein muting is activated during the muting time window (82, 821, 822, 823).

9. A safety arrangement (1) according to claim 8, **characterised in that** several muting time windows (82, 821, 822, 823) opened by a detection of objects on the conveyor device by means of the muting sensor or sensors (11, 12) overlap in time.

10. A safety arrangement (1) according to claim 8 or 9, **characterised in that** a muting time window (82, 821, 822, 823) is opened after expiry of a time interval (71) determined by the conveying speed or conveying device after detection of an object by means of the muting sensor or sensors (11, 12).

11. A safety arrangement (1) according to one of claims 8-10, **characterised in that** the end of a muting time window (82, 821, 822, 823) is calculated as a function of the beginning of this muting time window (82, 821, 822, 823).

12. A safety arrangement (1) according to claim 11, **characterised in that** the beginning and/or the end of a muting time window (82, 821, 822, 823) is or are provided by delays of the signal of the or a muting sensor (11, 12) caused by means of a circuit arrangement when an object is deactivated.

13. A safety arrangement (1) according to claim 11, **characterised in that** the end of the muting time window (82, 821, 822, 823) is calculated as a function of the conveying speed or of the conveying path of the conveying device.

14. A safety arrangement (1) according to one of claims 8 to 13, **characterised in that** a muting is closed before the end of the muting time window (82, 821, 822, 823) if an object is detected in the protection area (13), or if an object is detected in the muting control area (14), or if the conveying speed is above a limit value or below a limit value.

15. A safety arrangement (1) according to claim 14, **characterised in that** the safety output signal is a switch-off command for a hazardous system.

## Revendications

1. Dispositif de sécurité (1) avec un rideau lumineux (2) pour détecter des objets dans une zone de surveillance (8) avec un arrangement d'axes de faisceaux formés chacun par un émetteur (4) émettant des faisceaux lumineux (3) et au moins un récepteur associé (6), la zone de surveillance (8) est surveillée à l'aide des axes de faisceau ou d'un scanner de zone (20), dans lequel des faisceaux lumineux (21) émis par un émetteur (22) balayent la zone de surveillance (8), **caractérisée par le fait que** la zone de surveillance (8) est subdivisée en au moins une zone de protection (13) et au moins une zone de contrôle de l'inhibition (14), dans lequel le dispositif de sécurité est configuré de manière à ce que les fonctions d'inhibition du dispositif de sécurité soient contrôlées en fonction de la détection d'un objet dans la zone de contrôle de l'inhibition (14), un signal de sortie de sécurité n'est généré qu'en cas de détection d'un objet dans la zone de protection (13) si aucune inhibition n'est activée, et en cas de détection d'un objet dans la zone de contrôle de l'inhibition (14), un signal de sortie de sécurité n'est généré ni lorsque l'inhibition est activée, ni lorsqu'elle ne l'est pas.

2. Dispositif de sécurité (1) selon la revendication 1, **caractérisé en ce que** la ou les zones de protection (13) et les zones de contrôle de l'inhibition (14) ne se chevauchent pas et se complètent sans discontinuité pour former la zone de surveillance (8).

3. Dispositif de sécurité (1) selon l'une des revendications 1 ou 2, **caractérisé par le fait que** l'inhibition peut être désactivée en fonction de la détection d'un objet dans la zone de contrôle de l'inhibition (14).

4. Dispositif de sécurité (1) selon l'une des revendications 1 à 3, **caractérisé en ce qu'**il comporte au moins un capteur d'inhibition (11, 12), l'inhibition pouvant être activée en fonction de la détection d'un objet par le capteur d'inhibition (11, 12).

5. Dispositif de sécurité (1) selon la revendication 4, **caractérisé en ce qu'**un ensemble de capteurs d'inhibition (11, 12) est prévu pour détecter la vitesse des objets.

6. Dispositif de sécurité (1) selon l'une des revendications 4 ou 5, **caractérisé en ce que** la limite entre la zone de protection (13) et la zone de contrôle de l'inhibition (14) est adaptée au positionnement du ou des capteurs d'inhibition (11, 12).

7. Dispositif de sécurité (1) selon l'une des revendications 4 ou 5, **caractérisé en ce qu'**un dispositif de transport est prévu sur lequel le rideau lumineux (2) est disposé, de sorte que les objets transportés sur le dispositif de transport à une vitesse de transport peuvent être détectés par le rideau lumineux, dans lequel le ou les capteurs d'inhibition (11, 12) sont disposés devant le rideau lumineux (2) dans la direction de transport du dispositif de transport.

8. Dispositif de sécurité (1) selon la revendication 7, **caractérisé en ce qu'**une fenêtre de temps d'inhibition (82, 821, 822, 823) est ouverte au moyen du ou des capteurs d'inhibition (11, 12) en fonction de la détection d'un objet guidé sur le dispositif transporteur, l'inhibition étant activée pendant la fenêtre de temps d'inhibition (82, 821, 822, 823).

9. Dispositif de sécurité (1) selon la revendication 8, **caractérisé en ce que** plusieurs fenêtres de temps d'inhibition (82, 821, 822, 823) ouvertes par une détection d'objets sur le dispositif transporteur au moyen du ou des capteurs d'inhibition (11, 12) se chevauchent dans le temps.

10. Dispositif de sécurité (1) selon les revendications 8 ou 9, **caractérisé en ce qu'**une fenêtre de temps d'inhibition (82, 821, 822, 823) est ouverte après l'expiration d'un intervalle de temps (71) déterminé par la vitesse de transport ou le dispositif de transport après la détection d'un objet au moyen du ou des capteurs d'inhibition (11, 12).

11. Dispositif de sécurité (1) selon l'une des revendications 8 à 10, **caractérisé en ce que** la fin d'une fenêtre de temps d'inhibition (82, 821, 822, 823) est calculée en fonction du début de cette fenêtre de temps d'inhibition (82, 821, 822, 823).

12. Dispositif de sécurité (1) selon la revendication 11, **caractérisé en ce que** le début et/ou la fin d'une fenêtre de temps d'inhibition (82, 821, 822, 823) est ou sont assurés par des retards du signal du ou d'un capteur d'inhibition (11, 12) provoqués au moyen d'un circuit lorsqu'un objet est désactivé.

13. Dispositif de sécurité (1) selon la revendication 11, **caractérisé en ce que** la fin de la fenêtre de temps d'inhibition (82, 821, 822, 823) est calculée en fonction de la vitesse de transport ou de la trajectoire du dispositif de transport.

14. Dispositif de sécurité (1) selon l'une des revendications 8 à 13, **caractérisé en ce qu'**une inhibition est fermée avant la fin de la fenêtre de temps d'inhibition (82, 821, 822, 823) si un objet est détecté dans la zone de protection (13), ou si un objet est détecté dans la zone de contrôle d'inhibition (14), ou si la vitesse de transport est supérieure à une valeur limite ou inférieure à une valeur limite.

15. Dispositif de sécurité (1) selon la revendication 14, **caractérisé par le fait que** le signal de sortie de sécurité est une commande d'arrêt d'un système dangereux.
